# EUROPÄISCHE PATENTSCHRIFT

(11) **EP 1 022 882 B1**
(45) Veröffentlichungstag und Bekanntmachung des Hinweises auf die Patenterteilung: **22.03.2006**
(21) Anmeldenummer: 00100454.8
(22) Anmeldetag: 10.01.2000
(51) Int. Cl.: H04L 12/56, H04L 29/06, H04M 7/00, H04M 3/42, H04M 3/38

(54) **Verfahren zum Realisieren einer Leistungsmerkmalsteuerung in einem Kommunikations-Datennetz**
Method to achieve performance characteristics control in a communications data network
Méthode pour la réalisation du contrôle des caractéristiques de performance dans un réseau de communication de données

(30) Priorität: 25.01.1999 DE 19902752
(43) Veröffentlichungstag der Anmeldung: 26.07.2000
(73) Patentinhaber: SIEMENS AKTIENGESELLSCHAFT, 80333 München (DE)
(72) Erfinder: Klaghofer, Karl, 81373 München (DE); Remmele, Werner, 86415 Mering (DE); Korpi, Markku, 82319 Starnberg (DE); Karsten, Niclas, 81547 München (DE)

(56) Entgegenhaltungen:
- US-A- 5 606 604
- US-A- 5 706 338
- THOM G A: "H. 323: THE MULTIMEDIA COMMUNICATIONS STANDARD FOR LOCAL AREA NETWORKS" IEEE COMMUNICATIONS MAGAZINE, IEEE SERVICE CENTER. PISCATAWAY, N.J, US, Bd. 34, Nr. 12, 1. Dezember 1996 (1996-12-01), Seiten 52-56, XP000636454 ISSN: 0163-6804

## Beschreibung

Verfahren zum Realisieren einer Leistungsmerkmalsteuerung in einem Kommunikations-Datennetz

Die Erfindung betrifft ein Verfahren zum Realisieren einer Leistungsmerkmalsteuerung eines Leistungsmerkmals für Echtzeitkommunikation in einem Endgerät eines Kommunikations-Datennetzes nach dem Standard ITU-T H.323.

In einem Kommunikations-Datennetz nach dem Standard ITU-T H.323 werden viele Leistungsmerkmale dezentral in den beteiligten Endgeräten gesteuert. Die hierzu erforderlichen Arbeitsschritte einer Leistungsmerkmalsteuerung werden in den beteiligten Endgeräten abgearbeitet. In diesen Endgeräten ist die hierzu erforderliche Software gespeichert und installiert.

Thom G.A: "H.323: The multimedia communications standard for Local Area Networks", IEEE Communications Magazine, IEEE Service Center. Piscataway, N.J., US, Bd. 34, Nr. 12, 1. Dezember 1996, Seiten 52-56, XP 000636454 offenbart Basisvermittlungsfunktionen wie Verbindungsauf- oder - abbau, ohne auf eine Leistungsmerkmalsteuerung einzugehen.

Der Standard ITU-T H.450 beschreibt zusätzliche Leistungsmerkmale für ein Kommunikations-Datennetz gemäß dem Standard ITU-T H.323. So beschreibt die ITU-T Recommendation H.450.2 "Call Transfer Supplementary Service for H.323" vom Februar 1998 (datiert 27. Januar 1998) die Abwicklung eines Leistungsmerkmals Rufumlenkung, bei der die Leistungsmerkmalsteuerung verteilt in zwei Endgeräten, beziehungsweise in einem Endgerät und in einer Gatekeeper-Funktion abläuft. In gleicher Weise werden die in der ITU-T Draft Recommendation H.450.5 "Call Park and Call Pickup Supplementary Service for H.323" vom September 1998 und in der ITU-T Draft Recommendation H.450.4 "Call Hold Supplementary Service for H.323" vom September 1998 beschriebenen Leistungsmerkmale Parken eines Rufs, Übernehmen eines Rufs und Halten eines Rufs dezentral gesteuert.

Um solche zusätzlich eingeführten Leistungsmerkmale realisieren zu können, ist an den beteiligten Endpunkten, also in den beteiligten Endgeräten und gegebenenfalls in beteiligten Servern zum Realisieren von Gatekeeper-Funktionen oder Proxy-Funktionen die erforderliche Steuersoftware installiert.

In zunehmendem Maße werden in Datennetzen gemäß ITU-T H.323 Leistungsmerkmale für Echtzeitkommunikation nicht nur im Endgerät, sondern auch mit verteilter Steuerung teilweise in zentralen Einrichtungen wie Servern, Gatekeeper-Funktion oder Proxy-Funktion gesteuert. Die Betreiber von solchen Einrichtungen oder die Anbieter von Diensten wollen eventuell die Dienste ihrer Einrichtungen nur berechtigten Benutzern bereitstellen oder die Nutzung ihrer Einrichtungen zum Realisieren bestimmter Leistungsmerkmale erfassen. Ein solches Erfassen kann sowohl der sogenannten Vergebührung als auch der statistischen Erfassung für die Netzplanung dienen.

Speziell in Datennetzen nach ITU-T H.323 wird häufig das selbe Endgerät von unterschiedlichen Benutzern zu unterschiedlichen Zeiten benutzt. Ein Benutzer meldet sich zu Beginn einer Sitzung an einem solchen Endgerät mit einem Alias-Namen an und gibt ein Paßwort ein. Das Endgerät wird daraufhin mit den Berechtigungen des Benutzers konfiguriert. Diese Konfiguration erfolgt im Endgerät und ist somit vom Benutzer manipulierbar.

In einem Endgerät eines Kommunikations-Datennetzes gemäß dem Standard ITU-T H.323 ist die zur Realisierung von Leistungsmerkmalen erforderliche Steuersoftware unabhängig davon installiert, ob ein Benutzer des Endgerätes, zur Nutzung bestimmter Leistungsmerkmale berechtigt ist oder nicht.

Aufgabe der vorliegenden Erfindung ist es, die Realisierung des Ablaufs einer Leistungsmerkmalsteuerung eines Leistungsmerkmals für Echtzeitkommunikation in einem Endgerät eines Kommunikations-Datennetz nach dem Standard ITU-T H.323 erfaßbar zu machen oder nur fallweise zu ermöglichen.

Eine Lösung dieser Aufgabe liefert ein erfindungsgemäßes Verfahren mit folgenden Schritten: Veranlaßt durch einen in einem Kommunikations-Endgerät verarbeiteten Befehl zum Realisieren des Leistungsmerkmals wird eine Aufforderung zum Übermitteln eines Freigabeschlüssels zum Benutzen einer im Kommunikations-Endgerät installierten Steuersoftware für die Leistungsmerkmalsteuerung an eine zentrale Einrichtung im Kommunikations-Datennetz übermittelt;
in der zentralen Einrichtung wird die Berechtigung des auffordernden Kommunikations-Endgerätes geprüft und bei positivem Prüfergebnis wird der Freigabeschlüssels von der zentralen Einrichtung an das Kommunikations-Endgerät übermittelt; die Leistungsmerkmalsteuerung wird durch Abarbeiten der Steuersoftware unter Verwendung des Freigabeschlüssels im Kommunikations-Endgerät ausgeführt.

Eine andere Lösung dieser Aufgabe liefert ein erfindungsgemäßes Verfahren mit folgenden Schritten: Veranlaßt durch einen in einem Kommunikations-Endgerät verarbeiteten Befehl zum Realisieren des Leistungsmerkmals wird eine Aufforderung zum Übermitteln eines Freigabeschlüssels zum Benutzen einer im Kommunikations-Endgerät installierten Steuersoftware für die Leistungsmerkmalsteuerung an eine zentrale Einrichtung im Kommunikations-Datennetz übermittelt;
in der zentralen Einrichtung wird die Aufforderung durch das Kommunikations-Endgerät registriert, und der Freigabeschlüssel wird von der zentralen Einrichtung an das Kommunikations-Endgerät übermittelt;
die Leistungsmerkmalsteuerung wird durch Abarbeiten der Steuersoftware unter Verwendung des Freigabeschlüssels im Kommunikations-Endgerät ausgeführt.

Diese erfindungsgemäßen Verfahren setzen jeweils voraus, daß die im Endgerät gespeicherte Steuersoftware zur Realisierung einer speziellen Leistungsmerkmalsteuerung nur abgearbeitet werden kann, wenn ein Freigabeschlüssel vorliegt. Ein solcher Freigabeschlüssel kann beispielsweise von einer jeweils aktuellen Ruf-Identifikationsnummer oder von der aktuellen Zeit abgeleitet sein. In beiden Fällen ist der Freigabeschlüssel bei jedem erneuten Starten der Software neu zu erfragen. Die erfindungsgemäßen Verfahren setzen außerdem voraus, daß innerhalb des Daten-Kommunikationsnetzes eine zentrale Einrichtung vorgesehen ist, die auf Anfrage die Freigabeschlüssel übermittelt, die zum Freigeben der für bestimmte Leistungsmerkmalsteuerungen erforderlichen Software bestimmt sind. An eine solche zentrale Einrichtung, beispielsweise ein Server im Kommunikations-Datennetz, wird auf einen Befehl zum Realisieren des Leistungsmerkmals hin eine Aufforderung zum Übermitteln eines Freigabeschlüssels zum Benutzen einer im Kommunikations-Endgerät installierten Steuersoftware für die Leistungsmerkmalsteuerung übermittelt. Eine solche Aufforderung wird beispielsweise von der Anwendungsprogramm-Schnittstelle API (API ist vom englischsprachigen Ausdruck Application Programming Interface abgeleitet) über einen HTTP-Protokollstapel über Datenbasisschnittstellen (z.Bsp. ODBC) oder aber auch über H.450-Protokolle abgewickelt. Das daraufhin erfolgende Übermitteln des Freigabeschlüssels kann ebenfalls mit Hilfe von auf HTTP basierenden Protokollen oder beispielsweise mit Hilfe von auf H.450 basierenden Protokollen erfolgen. Es können Sicherheitsfunktionen, die bei der Verwendung von auf H.450 basierenden Protokollen erforderlich sein können, beispielsweise durch den Einsatz von Verschlüsselungsalgorithmen gemäß dem für die H.323-Kommunikation empfohlenen Standard ITU-T H.235 realisiert werden.

Beim erfindungsgemäßen Verfahren wird in der zentralen Einrichtung die Berechtigung zur Nutzung des gewünschten Leistungsmerkmals durch das auffordernde Kommunikations-Endgerät geprüft. Eine solche Berechtigungsprüfung erfolgt üblicherweise anwenderbezogen. Geprüft wird also die Berechtigung des Endgeräts in einer jeweils für einen Benutzer spezifischen Konfiguration und somit die Berechtigung des Benutzers. Nur bei positivem Prüfergebnis wird der Freigabeschlüssels von der zentralen Einrichtung an das Kommunikations-Endgerät übermittelt. Da das Endgerät für unterschiedliche Benutzer unterschiedlich konfiguriert sein kann, kann die Berechtigungsprüfung für dasselbe Endgerät bei einem Benutzer ein positives und bei einem anderen Benutzer ein negatives Prüfergebnis liefern.

Gemäß einem anderen Aspekt der Erfindung wird in der zentralen Einrichtung die Aufforderung zum Übersenden des Freigabeschlüssels durch das Kommunikations-Endgerätes registriert, und der Freigabeschlüssels wird von der zentralen Einrichtung an das Kommunikations-Endgerät übermittelt. Dadurch kann jede Nutzung des entsprechenden, mit Hilfe dieses Freigabeschlüssels ausführbaren Leistungsmerkmals, beispielsweise zum Festsetzen anfallender Gebühren, registriert werden.

Bei einer besonders günstige Ausgestaltungsform des erfindungsgemäßen Verfahrens wird in der zentralen Einrichtung die Aufforderung zum Übersenden des Freigabeschlüssels durch das auffordernde Kommunikations-Endgerätes registriert und die Berechtigung zur Nutzung des gewünschten Leistungsmerkmals durch dieses Kommunikations-Endgerät geprüft. Nur bei positivem Prüfergebnis wird der Freigabeschlüssel von der zentralen Einrichtung an das Kommunikations-Endgerät übermittelt. Ein solches Verfahren ermöglicht sowohl die Zugriffserfassung als auch die Zugriffskontrolle auf bestimmte Leistungsmerkmale durch den Betreiber zentraler Netzeinrichtungen.

In einer besonders einfachen Ausführungsform des erfindungsgemäßen Verfahrens ist eine von der zentralen Einrichtung abgegebene Bestätigungsmeldung als Freigabeschlüssel für die Steuersoftware einer Leistungsmerkmalsteuerung vorgesehen. In diesem Falle kann das Empfangen dieser Bestätigungsmeldung durch das zum Übersenden des Freigabeschlüssels auffordernde Endgerät dem Anwenden des Freigabeschlüssels entsprechen. Die Steuersoftware der Leistungsmerkmalsteuerung kann folglich dann im Endgerät abgearbeitet werden, wenn die erforderliche Bestätigungsmeldung von der zentralen Einrichtung empfangen worden ist.

Nachstehend wird die Erfindung an Hand eines Ausführungsbeispiels unter Bezugnahme auf die Figuren näher erläutert.
Figur 1 zeigt ein Ausführungsbeispiel eines Ablaufplans der wesentlichen Teile eines erfindungsgemäßen Verfahren, wenn ein Endgerät eine Leistungsmerkmalanfrage zum Realisieren einer Konferenzverbindung an einen Konferenzserver absenden möchte.
Figur 2 zeigt ein Ausführungsbeispiel eines im Verfahren gemäß Figur 1 verwendeten Kommunikations-Endgeräts in schematischer Blockdarstellung gemäß eines erweiterten Protokoll-Schichtmodells (Protocol Stack).

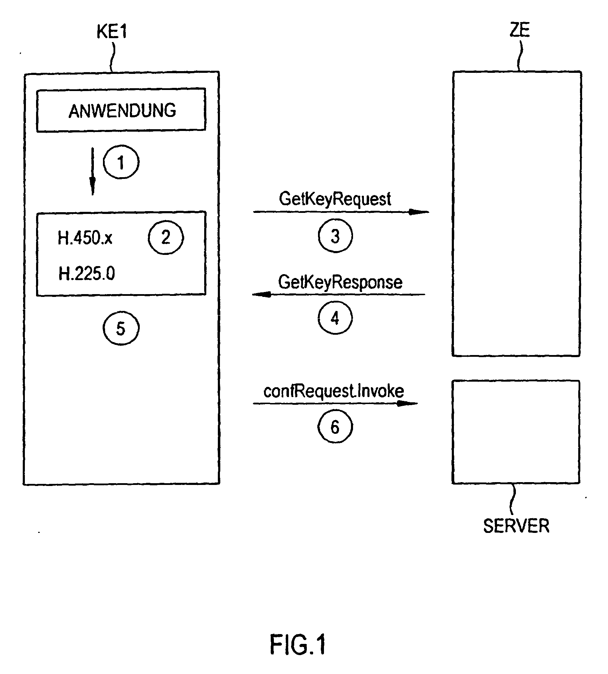

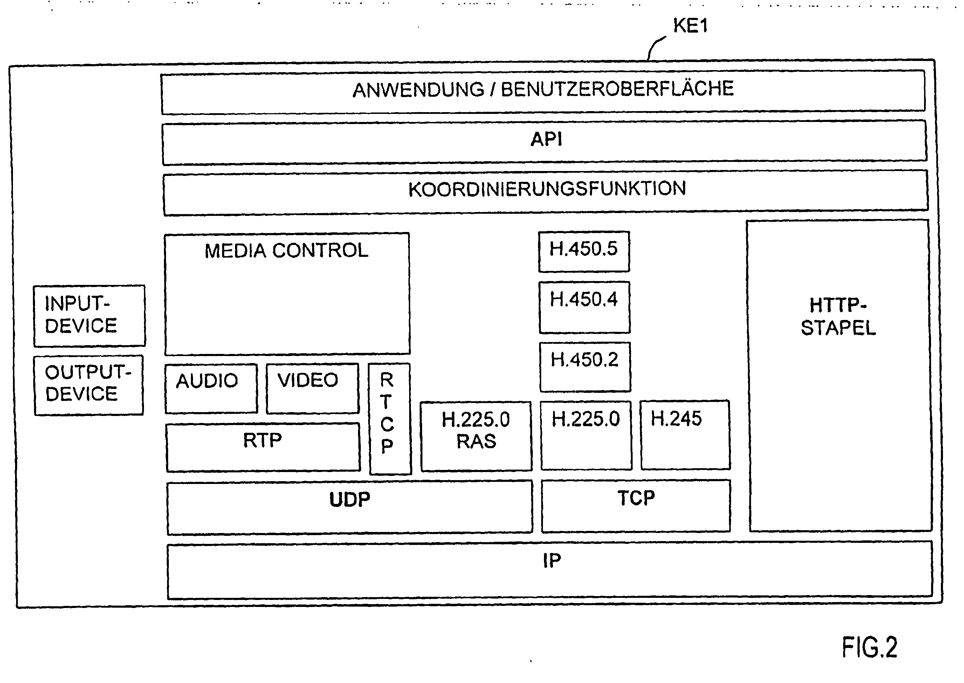

In Figur 2 ist ein Ausführungsbeispiel eines Kommunikations-Endgeräts KE in schematischer Blockdarstellung in Form eines erweiterten Protokoll-Schichtmodells dargestellt. Um die Darstellung der Figur 1 verständlicher erläutern zu können, wird zuerst dieses Kommunikations-Endgerät KE nach Figur 2 beschrieben.

Wie in Netzen gemäß ITU-T H.323 üblich, basiert die Kommunikation des Endgeräts KE auf dem Internetprotokoll IP. Aufbauend auf dem Internetprotokoll IP ist in Figur 2 in der Mitte der Protokollstapel der die Rufsteuerung behandelnden Signalisierung dargestellt.

Bei diesem Beispiel ist aufbauend auf dem Internetprotokoll IP und dem Signalisierungsprotokoll TCP ein Funktionsmodul H.225.0 gemäß dem Protokoll ITU-T H.225.0 für die Signalisierung der Basisrufsteuerung in H.323-Netzen vorgesehen. Beispielhafte Meldungen dieses Funktionsmoduls H.225.0 sind SETUP oder CONNECT.

Außerdem ist aufbauend auf dem Signalisierungsprotokoll TCP ein Funktionsmodul H.245 gemäß dem Steuerprotokoll ITU-T H.245 vorgesehen. Dieses Funktionsmodul H.245 dient unter anderem zum Austauschen von TerminalCapability Meldungen, d.h. zum Abgeben und Empfangen von Information bezüglich Endgerätefähigkeiten. Außerdem dient dieses Funktionsmodul H.245 dem Festlegen von Aufgabenverteilungen wie Master- bzw. Slave-Funktionen und zum Öffnen und Schließen von zur Nutzdatenübertragung dienenden logischen Kanälen.

Auf das Funktionsmodul H.225.0 setzen Funktionsmodule zusätzlicher Leistungsmerkmalsteuerungen auf wie zum Beispiel ein Funktionsmodul H.450.2 zum Realisieren einer Rufumlenkungs-Funktion, ein Funktionsmodul H.450.4 zum Realisieren einer Halten-Funktion , und ein Funktionsmodul H.450.5 zum Realisieren einer Funktion "Ruf parken" oder "Ruf übernehmen" nach dem Standard ITU-T H.450.

In der Figur 2 links neben dem soeben beschriebenen Signalisierungsstapel ist ein Nutzdatenstapel dargestellt. Auch dieser Nutzdatenstapel basiert auf dem Internetprotokoll IP, auf dem UDP und auf diesem wiederum ein Echtzeitprotokoll RTP (hergeleitet vom englischsprachigen Ausdruck Real Time Protokoll)aufgesetzt ist. Neben dem Echtzeitprotokoll RTP sind noch ein Echtzeitsteuerprotokoll RTCP und der die Bereiche Registrierung, Administration und Status betreffende Teil H.225.0 RAS des Steuerprotokolls gemäß ITU-T H.225.0 auf dem Protokoll UDP abgestützt.

Auf dem Echtzeitprotokoll RTP aufbauend sind Codecs oder zumindest Decoder für Audio und Video AUDIO, VIDEO vorgesehen. Solche Audiocodecs AUDIO sind beispielsweise gemäß einem der Standards ITU-T G.711, ITU-T G.723.1, ITU-T G.728 ausgelegt. Auch ISO MPEG4 definiert Audiodecoder AUDIO. ISO MPEG4 definiert ebenfalls entsprechende Videodecoder VIDEO. Bei der Verwendung von Decodern gemäß ISO MPEG4 sind gegebenenfalls proprietäre Coder in einem Kommunikations-Endgerät KE enthalten.

Das Echtzeitsteuerprotokoll RTCP und die Codecs bzw. Decoder für Audio und Video AUDIO, VIDEO werden von einer Mediensteuerung MEDIA CONTROL gesteuert, die unter anderem für das Zusammenspiel von im Kommunikations-Endgerät KE vorgesehenen Media-Eingabemitteln INPUT-DEVICE und Media-Ausgabemitteln OUTPUT-DEVICE zuständig ist. Media-Eingabemitteln INPUT-DEVICE sind hierbei beispielsweise (In Figur 2 nicht explizit dargestellte) Kameras für Videodaten, Mikrophone für Audiodaten oder Schnittstellen zu nicht im Kommunikations-Endgerät KE enthaltenen Datenquellen. Ausgabemittel OUTPUT-DEVICE sind hierbei beispielsweise (In Figur 2 nicht explizit dargestellte) ein Bildschirm für Videodaten, Lautsprecher für Audiodaten oder Schnittstellen zu nicht im Kommunikations-Endgerät KE enthaltenen Ausgabemitteln wie Drucker oder Massenspeicher.

Der beschriebene Stapel für die Nutzdatenbehandlung RTP, RTCP, AUDIO, VIDEO und MEDIA CONTROL und der beschriebene Stapel für die Signalisierungsbehandlung H.245, H.225.0, H.450.2, H.450.4 und H.450.5 sind über eine Koordinierungsfunktion KOORDINIERUNGSFUNKTION an eine Anwendungsprogramm-Schnittstelle API gekoppelt. Die Koordinierungsfunktion KOORDINIERUNGSFUNKTION koordiniert hierbei das Zusammenspiel der Einheiten dieser Stapel mit der Anwendungsprogramm-Schnittstelle API (API steht für den englischsprachigen Ausdruck Application Programming Interface).

Beispiele für eine Anwendungsprogramm-Schnittstelle API sind TAPI oder JTAPI. Die Anwendungsprogramm-Schnittstelle API vermittelt zwischen Anwendungsprogrammen bzw. einer Benutzeroberfläche und der Koordinierungsfunktion KOORDINIERUNGSFUNKTION.

Neben den für Multimediakommunikation erforderlichen Stapeln, also den beschriebenen Stapeln für die Nutzdatenbehandlung RTP, RTCP, AUDIO, VIDEO und MEDIA CONTROL und für die Signalisierungsbehandlung H.245, H.225.0, H.450.2, H.450.4 und H.450.5 ist auf der rechten Seite in der Figur 2 noch ein Funktionsmodul HTTP-STAPEL dargestellt. Auch dieses Funktionsmodul HTTP-STAPEL setzt auf das Internetprotokoll IP auf und ist über die Koordinierungsfunktion KOORDINIERUNGSFUNKTION und die Anwendungsprogramm-Schnittstelle API an die Benutzeroberfläche beziehungsweise an Anwendungen ANWENDUNGEN/BENUTZEROBERFLÄCHE angekoppelt. Der Aufbau des Funktionsmoduls HTTP-STAPEL ist in der Figur 2 nicht explizit dargelegt, da er allgemein bekannt ist. Ein solches Funktionsmodul HTTP-STAPEL wird beispielsweise zur Übertragung bei JAVA-Anwendungen eingesetzt.

Figur 1 zeigt ein Ausführungsbeispiel eines Ablaufplans der wesentlichen Teile des erfindungsgemäßen Verfahrens, wenn ein Endgerät KE eine Leistungsmerkmalanfrage zum Aufbauen einer Konferenzkommunikation an einen Konferenzserver SERVER übermitteln möchte.

Es wird davon ausgegangen, daß ein Teilnehmer am Endgerät KE eine Leistungsmerkmalanfrage zum Aufbauen einer Konferenzkommunikation an einen Konferenzserver SERVER übermitteln möchte und die erforderliche Steuersoftware im Endgerät KE installiert ist.

Im ersten Endgerät KE1 ruft ein Anwendungsmodul oder die Benutzeroberfläche das Realisieren des Leistungsmerkmals Konferenzkommunikation auf. Dieser Vorgang ist in Figur 1 mit 1 gekennzeichnet. Veranlaßt durch den hierzu abgegebenen Befehl wird im Endgerät KE1 geprüft, ob eine erforderliche Nutzungsberechtigung verfügbar ist und gegebenenfalls, ob die erforderliche Steuersoftware im ersten Endgerät installiert ist. Dieser Vorgang, der in Figur 1 mit 2 gekennzeichnet ist, ist für das erfindungsgemäße Verfahren nicht unbedingt erforderlich, hilft aber, unnötigen Informationstransfer zu vermeiden. Da diese Steuersoftware im ersten Endgerät KE1 als installiert erkannt wurde und eine Nutzungsberechtigung im Endgerät bestätigt wurde, wird an eine zentrale Einrichtung ZE im Kommunikations-Datennetz eine Aufforderung "GetKeyRequest" zum Übermitteln einer Freigabemeldung oder eines Freigabeschlüssels für die Leistungsmerkmalsteuerung übermittelt. Dieser Vorgang ist in Figur 1 mit 3 gekennzeichnet und wird beispielsweise über das HTTP-Funktionsmodul HTTP-STACK abgewickelt. Die Bezeichnung "GetKeyRequest" sowie die meisten nachstehend noch erläuterten, in Figur 1 verwendeten Nachrichtennamen sind hierbei logische Nachrichtennamen, sogenannte Primitives.

In der zentralen Einrichtung ZE wird die Berechtigung des auffordernden Endgerätes KE1 geprüft und die Aufforderung registriert; bei positivem Prüfergebnis wird der Freigabeschlüssel mit einer Quittungsmeldung "GetKeyResponse" von der zentralen Einrichtung ZE an das Endgerät KE1 übermittelt. Dieser Vorgang ist in Figur 1 mit 4 gekennzeichnet.

Im Endgerät KE1 wird die Leistungsmerkmalsteuerung durch Abarbeiten der Steuersoftware unter Verwendung des Freigabeschlüssels ausgeführt. Dieser Vorgang ist in Figur 1 mit 5 gekennzeichnet.

Als erstes Ergebnis dieses Steuerungsablaufs übermittelt das Endgerät KE eine Aufforderungsmeldung "confRequest.Invoke" an den Konferenzserver SERVER. Dieser Vorgang ist in Figur 1 mit 6 gekennzeichnet. Der weitere Ablauf zum Realisieren dieses beispielhaft genannten Leistungsmerkmals ist nicht Gegenstand der Erfindung. Er ist daher nicht explizit in der Figur 1 dargestellt und wird hier auch nicht beschrieben.

## Patentansprüche

1. Verfahren zum Realisieren einer Leistungsmerkmalsteuerung eines Leistungsmerkmals für Echtzeitkommunikation in einem Kommunikations-Datennetz nach dem Standard ITU-T H.323, **gekennzeichnet durch** die folgenden Schritte:
Veranlaßt **durch** einen in einem Kommunikations-Endgerät verarbeiteten Befehl zum Realisieren des Leistungsmerkmals wird eine Aufforderung zum Übermitteln eines Freigabeschlüssels zum Benutzen einer im Kommunikations-Endgerät installierten Steuersoftware für die Leistungsmerkmalsteuerung an eine zentrale Einrichtung im Kommunikations-Datennetz übermittelt;
in der zentralen Einrichtung wird die Berechtigung des auffordernden Kommunikations-Endgerätes geprüft, und bei positivem Prüfergebnis wird der Freigabeschlüssel von der zentralen Einrichtung an das Kommunikations-Endgerät übermittelt;
die Leistungsmerkmalsteuerung wird **durch** Abarbeiten der Steuersoftware unter Verwendung des Freigabeschlüssels im Kommunikations-Endgerät ausgeführt.

2. Verfahren zum Realisieren einer Leistungsmerkmalsteuerung eines Leistungsmerkmals für Echtzeitkommunikation in einem Kommunikations-Datennetz nach dem Standard ITU-T H.323, **gekennzeichnet durch** die folgenden Schritte:
Veranlaßt **durch** einen in einem Kommunikations-Endgerät verarbeiteten Befehl zum Realisieren des Leistungsmerkmals wird eine Aufforderung zum Übermitteln eines Freigabeschlüssels zum Benutzen einer im Kommunikations-Endgerät installierten Steuersoftware für die Leistungsmerkmalsteuerung an eine zentrale Einrichtung im Kommunikations-Datennetz übermittelt; in der zentralen Einrichtung wird die Aufforderung **durch** das Kommunikations-Endgerätes registriert, und der Freigabeschlüssel wird von der zentralen Einrichtung an das Kommunikations-Endgerät übermittelt; die Leistungsmerkmalsteuerung wird **durch** Abarbeiten der Steuersoftware unter Verwendung des Freigabeschlüssels im Kommunikations-Endgerät ausgeführt.

3. Verfahren nach Anspruch 1, **dadurch gekennzeichnet, daß** in der zentralen Einrichtung die Aufforderung zum Übermitteln eines Freigabeschlüssels durch das Kommunikations-Endgerät registriert wird.

## Claims

1. Method for implementing performance characteristics control of a performance characteristic for real time communication in a communications data network according to ITU-T Standard H.323, **characterised by** the following steps:
in response to a command processed in a communications terminal to implement the performance characteristic, a request to transmit an enable key for using control software installed in the communications terminal for performance characteristic control is transmitted to a central device in the communications data network;
in the central device the authorisation of the requesting communications terminal is checked and, if the result is positive, the enable key is transmitted by the central device to the communications terminal;
performance characteristic control is performed in the communications terminal by executing the control software using the enable key.

2. Method for implementing performance characteristics control of a performance characteristic for real time communication in a communications data network according to ITU-T Standard H.323, **characterised by** the following steps:
in response to a command processed in a communications terminal to implement the performance characteristic, a request to transmit an enable key for using control software installed in the communications terminal for performance characteristic control is transmitted to a central device in the communications data network;
in the central device the request by the communications terminal is registered and the enable key is transmitted by the central device to the communications terminal;
performance characteristic control is performed in the communications terminal by executing the control software using the enable key.

3. Method according to Claim 1, **characterised in that** the request by the communications terminal to transmit an enable key is registered in the central device.

## Revendications

1. Procédé pour la réalisation du contrôle d'une caractéristique de performance pour la communication en temps réel dans un réseau de communication de données selon la norme ITU-T H.323, **caractérisé par** les étapes suivantes :
causée par une instruction, traitée dans un terminal de communication pour la réalisation de la caractéristique de performance, une demande pour transmettre un code de libération, destiné à l'exploitation d'un logiciel de commande installé dans le terminal de communication pour le contrôle de caractéristiques de performance, est transmise à un dispositif central dans le réseau de communication de données ;
dans le dispositif central, l'autorisation du terminal de communication demandeur est vérifiée et, en cas de résultat de vérification positif, le code de libération est transmis par le dispositif central au terminal de communication ;
le contrôle de la caractéristique de performance est exécuté dans le terminal de communication par le déroulement du logiciel de commande en utilisant le code de libération.

2. Procédé pour la réalisation du contrôle d'une caractéristique de performance pour la communication en temps réel dans un réseau de communication de données selon la norme ITU-T H.323, **caractérisé par** les étapes suivantes :
causée par une instruction, traitée dans un terminal de communication pour la réalisation de la caractéristique de performance, une demande pour transmettre un code de libération, destiné à l'exploitation d'un logiciel de commande installé dans le terminal de communication pour le contrôle de caractéristiques de performance, est transmise à un dispositif central dans le réseau de communication de données ; dans le dispositif central, la demande est enregistrée par le terminal de communication, et le code de libération est transmis au terminal de communication par le dispositif central ; le contrôle de la caractéristique de performance est exécuté dans le terminal de communication par le déroulement du logiciel de commande en utilisant le code de libération.

3. Procédé selon la revendication 1, **caractérisé en ce que** la demande pour transmettre un code de libération est enregistrée dans le dispositif central par le terminal de communication.
